# FASCICULE DE BREVET EUROPEEN

(11) **EP 2 327 351 B1**
(45) Date de publication et mention de la délivrance du brevet: **02.01.2013**
(21) Numéro de dépôt: 10192548.5
(22) Date de dépôt: 25.11.2010
(51) Int. Cl.: A47L 15/42, A47L 15/48, D06F 39/00

(54) **Appareil de lavage ayant un réservoir comportant au moins une réserve d'un matériau à accumulation de chaleur**
Reinigungsgerät, das mit einem Behälter ausgestattet ist, der mindestens über eine Reserve eines Wärmespeichermaterials verfügt
Washing appliance with a tank comprising at least one stock of a heat-accumulation material

(30) Priorité: 27.11.2009 FR 0905732
(43) Date de publication de la demande: 01.06.2011
(73) Titulaire: FagorBrandt SAS, 92500 Rueil-Malmaison (FR)
(72) Inventeur: Pont, Hervé, 71680 Vinzelles (FR); Serve, Daniel, 69003 Lyon (FR)

(56) Documents cités:
- EP-A2- 0 669 097
- EP-A2- 0 914 800
- EP-A2- 1 111 118
- WO-A1-2007/004176
- DE-A1- 4 403 737
- DE-A1-102005 004 096
- JP-A- 11 113 831

## Description

La présente invention concerne d'une part un appareil de lavage pourvu d'un échangeur de chaleur permettant de récupérer, de stocker et de restituer de l'énergie calorifique d'un ou plusieurs bains de lavage et/ou de rinçage contenus dans une cuve de lavage.

Elle concerne également un procédé de commande en fonctionnement d'un appareil de lavage pourvu d'un échangeur de chaleur permettant de récupérer, de stocker et de restituer de l'énergie calorifique d'un ou plusieurs bains de lavage et/ou de rinçage contenus dans une cuve de lavage.

De manière générale, l'invention concerne les appareils de lavage, particulièrement les appareils de lavage à usage domestique, comprenant au moins une réserve de matériau à accumulation de chaleur mise en contact avec au moins un bain de lavage et/ou de rinçage.

On connaît un document EP 1 111 118 A2 qui décrit un appareil ménager véhiculant de l'eau comprenant au moins une conduite d'eaux usées pour l'arrivée des eaux usées évacuées d'une cuve de nettoyage à l'aide d'une pompe et une conduite d'eau douce pour l'arrivée de l'eau douce destinée à alimenter la cuve de nettoyage. L'appareil ménager comprend également un accumulateur de chaleur latente pour absorber l'énergie thermique dans les eaux usées, pour emmagasiner l'énergie thermique absorbée ainsi que pour fournir l'énergie thermique à l'eau douce. L'accumulateur de chaleur latente est intégré dans la conduite d'eau douce. L'accumulateur de chaleur latente est agencé de manière à produire à la fois un écoulement à courant parallèle et un écoulement à contre-courant de l'eau douce par rapport au sens d'écoulement des eaux usées afin d'obtenir une augmentation de l'énergie thermique transmissible.

Cependant, cet appareil ménager présente l'inconvénient de disposer d'une surface d'échange de chaleur limitée entre l'accumulateur de chaleur latente, la conduite des eaux usées, et la conduite d'eau douce.

Par conséquent, l'énergie thermique échangée entre les eaux usées, l'accumulateur de chaleur latente et l'eau douce n'est pas optimisée et nécessite une durée d'échange de chaleur importante.

Un tel accumulateur à chaleur latente ne permet pas d'optimiser les échanges de chaleur à cause de l'épaisseur des éléments constituant celui-ci et de la surface réduite de la paroi d'échange.

Par ailleurs, la mise en oeuvre d'un tel appareil ménager est complexe compte tenu des multiples étanchéités à réaliser au niveau des zones d'échange de chaleur entre l'accumulateur de chaleur latente et les conduites d'eaux usées et d'eau douce.

Cet appareil ménager présente également l'inconvénient que l'accumulateur à chaleur latente est constitué d'éléments ayant des formes sinueuses provoquant l'accumulation de saletés à l'intérieur de celui-ci lors de la circulation des eaux usées.

En outre, la durée d'échange de chaleur dans l'accumulateur à chaleur latente est limitée à la durée de circulation à contre-courant de l'eau douce et des eaux usées entrant et sortant dudit accumulateur de chaleur latente.

Les formes des éléments constituant l'accumulateur à chaleur latente sont complexes engendrant un coût élevé de fabrication de l'appareil ménager et des difficultés d'industrialisation.

On connaît également un document WO 2007/004176 A1 qui décrit un échangeur de chaleur permettant à l'énergie thermique de l'eau chaude de s'accumuler avant son évacuation vers l'extérieur et à l'énergie thermique accumulée d'être absorbée par l'eau froide devant entrer dans le cycle de lavage. Cet échangeur de chaleur comprend une chambre d'eau froide, qui stocke l'eau froide, entourant une chambre d'eau chaude, qui accueille l'eau chaude. Deux ou plusieurs ailettes, qui contiennent un matériau à changement de phase, s'étendent radialement de la chambre d'eau chaude à la paroi de la chambre d'eau froide.

La présente invention a pour but de résoudre les inconvénients précités et de proposer un procédé de commande en fonctionnement d'un appareil de lavage et un appareil de lavage associé permettant d'absorber l'énergie calorifique d'au moins un bain de lavage et/ou de rinçage, de stocker ladite énergie calorifique absorbée et de restituer ladite énergie calorifique stockée à au moins un bain de lavage et/ou de rinçage avec un échange de chaleur optimisé entre deux bains de lavage et/ou de rinçage pendant des phases d'échange de chaleur courtes tout en simplifiant la mise en oeuvre industrielle dudit appareil de lavage.

A cet égard, la présente invention vise, selon un premier aspect, un appareil de lavage comprenant une cuve de lavage, un échangeur de chaleur, ladite cuve de lavage contenant au moins un bain de lavage et/ou de rinçage utilisé lors d'un cycle de fonctionnement dudit appareil de lavage, ledit échangeur de chaleur comprenant au moins une réserve d'un matériau à accumulation de chaleur captant l'énergie calorifique d'au moins un premier bain de lavage et/ou de rinçage et restituant ladite énergie calorifique captée à au moins un deuxième bain de lavage et/ou de rinçage, ledit appareil de lavage comprenant un réservoir en communication fluidique avec ladite cuve de lavage, où lesdits au moins un premier et deuxième bain de liquide de lavage et/ou de rinçage sont mis en circulation successivement entre ladite cuve de lavage et ledit réservoir.

Selon l'invention,
- ledit réservoir comporte ladite au moins une réserve d'un matériau à accumulation de chaleur réalisée à partir de particules de matériau à accumulation de chaleur encapsulées,
- où ledit réservoir comprend au moins un élément de maintien desdites particules de matériau à accumulation de chaleur encapsulées à l'intérieur de celui-ci.

Ainsi, la cuve de lavage et le réservoir comportant des particules de matériau à accumulation de chaleur encapsulées sont couplés de manière fluidique de sorte que lesdits au moins un premier et deuxième bain de lavage et/ou de rinçage puissent circuler depuis ladite cuve de lavage vers ledit réservoir et inversement.

Le réservoir est adapté à contenir au moins en partie un bain de lavage et/ou de rinçage de sorte à créer un échangeur de chaleur entre des particules de matériau à accumulation de chaleur encapsulées dudit réservoir et l'un desdits au moins un premier et deuxième bain de lavage et/ou de rinçage provenant de la cuve de lavage.

Le matériau à accumulation de chaleur est contenu dans le réservoir de sorte à absorber ou à restituer l'énergie calorifique d'au moins un bain de lavage et/ou de rinçage mis en circulation entre la cuve de lavage et le réservoir contenant ladite au moins une réserve d'un matériau à accumulation de chaleur réalisée à partir de particules de matériau à accumulation de chaleur encapsulées.

Ladite au moins une réserve d'un matériau à accumulation de chaleur réalisée à partir de particules de matériau à accumulation de chaleur encapsulées est également adaptée à stocker l'énergie calorifique captée d'au moins un premier bain de lavage et/ou de rinçage avant de restituer cette énergie calorifique à au moins un deuxième bain de lavage et/ou de rinçage.

Ladite au moins une réserve d'un matériau à accumulation de chaleur réalisée à partir de particules de matériau à accumulation de chaleur encapsulées et placée dans un réservoir couplé de manière fluidique avec la cuve de lavage permet de maximiser la surface d'échange de chaleur entre le matériau à accumulation de chaleur et lesdits au moins un premier et deuxième bain de lavage et/ou de rinçage de sorte à optimiser les échanges thermiques.

Le réservoir comportant des particules de matériau à accumulation de chaleur encapsulées peut ainsi recevoir successivement ledit au moins un premier bain de lavage et/ou de rinçage pour l'absorption d'énergie calorifique par le matériau à accumulation de chaleur et ledit au moins un deuxième bain de lavage et/ou de rinçage pour la récupération d'énergie calorifique absorbée par ledit matériau à accumulation de chaleur.

De cette manière, les phases d'échange de chaleur entre le matériau à accumulation de chaleur et lesdits au moins un premier et deuxième bain de lavage et/ou de rinçage sont raccourcies et d'efficacité améliorée tout en simplifiant la structure de l'appareil de lavage et l'industrialisation de celui-ci.

Les particules de matériau à accumulation de chaleur encapsulées étant immergées dans lesdits au moins un premier et deuxième bain de lavage et/ou de rinçage, toute la surface de contact entre lesdites particules de matériau à accumulation de chaleur encapsulées et lesdits au moins un premier et deuxième bain de lavage et/ou de rinçage est ainsi utilisée en tant que surface d'échange thermique.

Lors du remplissage du réservoir comportant des particules de matériau à accumulation de chaleur encapsulées par lesdits au moins un premier et deuxième bain de liquide de lavage et/ou de rinçage, lesdites particules de matériau à accumulation de chaleur encapsulées sont entourées par lesdits au moins un premier et deuxième bain de liquide de lavage et/ou de rinçage.

Ainsi, les échanges de chaleur entre le matériau à accumulation de chaleur des particules encapsulées et lesdits au moins un premier et deuxième bain de liquide de lavage et/ou de rinçage sont optimisés grâce à une surface d'échange de chaleur maximale.

Ladite au moins une réserve d'un matériau à accumulation de chaleur logée à l'intérieur dudit réservoir réalisée à partir de particules de matériau à accumulation de chaleur encapsulées permet ainsi de vendre un appareil de lavage comprenant un réservoir en communication fluidique avec la cuve de lavage soit avec lesdites particules de matériau à accumulation de chaleur encapsulées soit sans lesdites particules de matériau à accumulation de chaleur encapsulées.

De cette manière, le fabricant d'appareil de lavage peut standardiser plusieurs appareils de lavage comprenant un réservoir en communication fluidique avec la cuve de lavage comportant les particules de matériau à accumulation de chaleur encapsulées ou non en fonction du modèle.

Ladite au moins une réserve d'un matériau à accumulation de chaleur logée à l'intérieur dudit réservoir et réalisée à partir de particules de matériau à accumulation de chaleur encapsulées permet de garantir une surface d'échange de chaleur optimisée entre le matériau à accumulation de chaleur et lesdits au moins un premier et deuxième bain de liquide de lavage et/ou de rinçage tout en garantissant des formes simples de ladite au moins une réserve d'un matériau à accumulation de chaleur.

De cette manière, l'encrassement du réservoir avec des saletés provenant desdits au moins un premier et deuxième bain de liquide de lavage et/ou de rinçage est empêché.

En outre, l'encapsulation des particules de matériau à accumulation de chaleur empêche de mélanger le matériau à accumulation de chaleur avec au moins un bain de lavage et/ou de rinçage.

Par ailleurs, l'encapsulation des particules de matériau à accumulation de chaleur permet de faciliter la mise en oeuvre de ladite au moins une réserve d'un matériau à accumulation de chaleur, notamment lors du stockage, de la manipulation et du dosage desdites particules dans le réservoir.

L'encapsulation des particules de matériau à accumulation de chaleur permet également de faciliter le recyclage de l'appareil de lavage en séparant aisément lesdites particules du réservoir.

Pratiquement, ledit au moins un élément de maintien desdites particules de matériau à accumulation de chaleur encapsulées à l'intérieur dudit réservoir est au moins une grille.

Dans un autre mode de réalisation de l'invention, ledit au moins un élément de maintien desdites particules de matériau à accumulation de chaleur encapsulées à l'intérieur dudit réservoir est au moins un dispositif de retenue en forme d'entonnoir.

Selon un second aspect, la présente invention vise un procédé de commande en fonctionnement d'un appareil de lavage, ledit appareil de lavage comprenant une cuve de lavage, un échangeur de chaleur, ladite cuve de lavage contenant au moins un bain de lavage et/ou de rinçage utilisé lors d'un cycle de fonctionnement dudit appareil de lavage, ledit échangeur de chaleur comprenant au moins une réserve d'un matériau à accumulation de chaleur captant l'énergie calorifique d'au moins un premier bain de lavage et/ou de rinçage et restituant ladite énergie calorifique captée à au moins un deuxième bain de lavage et/ou de rinçage.

Selon l'invention, le procédé de commande en fonctionnement d'un appareil de lavage comprend au moins les étapes suivantes :
- introduction successive desdits au moins un premier et deuxième bain de lavage et/ou de rinçage depuis ladite cuve de lavage à l'intérieur d'un réservoir comportant ladite au moins une réserve d'un matériau à accumulation de chaleur réalisée à partir de particules de matériau à accumulation de chaleur encapsulées,
- où ledit réservoir comprend au moins un élément de maintien desdites particules de matériau à accumulation de chaleur encapsulées à l'intérieur de celui-ci.

Ce procédé de commande en fonctionnement d'un appareil de lavage présente des avantages analogues à ceux décrits précédemment en référence à l'appareil de lavage selon l'invention.

En particulier, au moins un premier bain de lavage et/ou de rinçage est introduit depuis la cuve de lavage dans le réservoir comportant des particules de matériau à accumulation de chaleur encapsulées pour récupérer l'énergie calorifique dudit au moins un premier bain de lavage et/ou de rinçage. Et au moins un deuxième bain de lavage et/ou de rinçage est introduit depuis la cuve de lavage dans le réservoir comportant des particules de matériau à accumulation de chaleur encapsulées pour restituer l'énergie calorifique captée audit au moins un deuxième bain de lavage et/ou de rinçage.

Lesdits au moins un premier et deuxième bain de lavage et/ou de rinçage introduits dans le réservoir échangent de la chaleur avec ladite au moins une réserve d'un matériau à accumulation de chaleur logée à l'intérieur dudit réservoir et réalisée à partir de particules de matériau à accumulation de chaleur encapsulées de sorte que ledit matériau à accumulation de chaleur absorbe l'énergie calorifique dudit au moins un premier bain de lavage et/ou de rinçage et que ledit matériau à accumulation de chaleur restitue l'énergie calorifique captée audit au moins un deuxième bain de lavage et/ou de rinçage.

D'autres particularités et avantages de l'invention apparaîtront encore dans la description ci-après.

Aux dessins annexés, donnés à titre d'exemples non limitatifs :
- la figure 1 est une vue schématique en coupe d'une machine à laver la vaisselle conforme à un premier mode de réalisation de l'invention ; et
- la figure 2 est une vue schématique en coupe d'une machine à laver la vaisselle conforme à un deuxième mode de réalisation de l'invention.

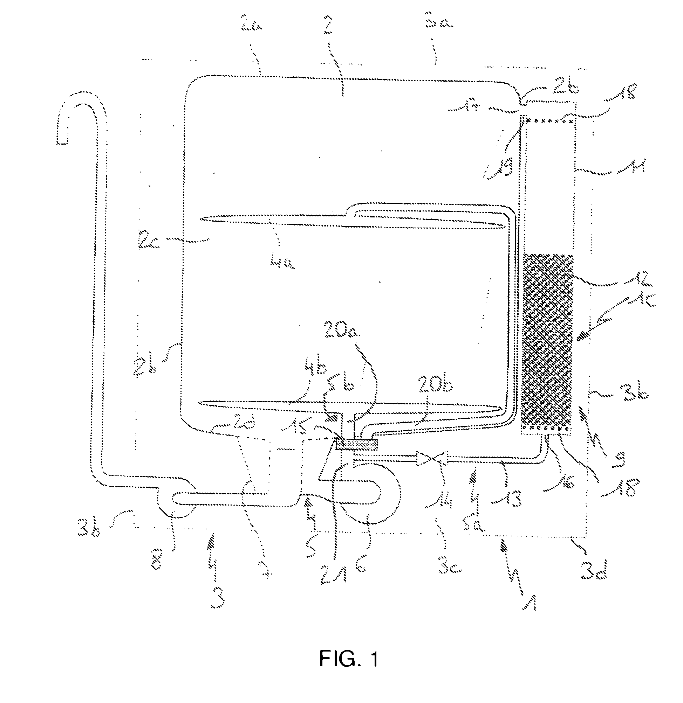

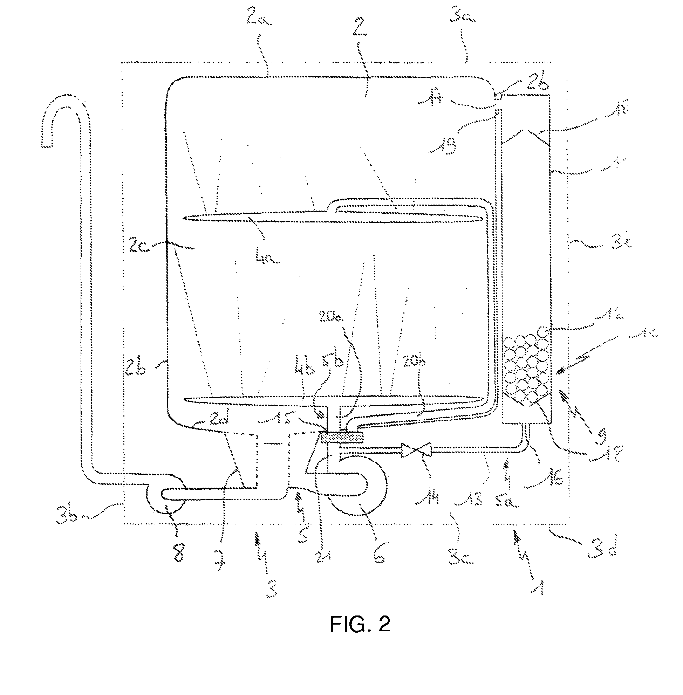

On va décrire tout d'abord en référence aux figures 1 et 2 un appareil de lavage.

Cet appareil de lavage peut être une machine à laver la vaisselle à usage domestique, ou une machine à laver le linge à usage domestique, ou une machine à laver et à sécher le linge à usage domestique.

Bien entendu, la présente invention s'applique à tous les types d'appareil de lavage, et notamment à chargement frontal et à chargement par le dessus de la vaisselle ou du linge.

On va décrire, en référence aux figures 1 et 2, une machine à laver la vaisselle conforme à l'invention.

Une machine à laver la vaisselle 1 comprend une cuve de lavage 2 dont la face frontale est fermée par une porte (non représentée). La cuve de lavage 2 est entourée par une carrosserie 3 comprenant une paroi supérieure 3a, des parois latérales 3b, une paroi de fond 3c et une paroi inférieure 3d.

La porte de la cuve de lavage 2 permet d'obturer une ouverture réalisée dans la cuve de lavage 2. Cette porte de cuve de lavage 2 peut ainsi être mobile entre une position fermée dans laquelle elle obture l'ouverture, de manière étanche, et une position ouverte.

Dans un exemple de réalisation, et de manière nullement limitative, la porte de cuve de lavage 2 est montée pivotante autour d'un axe de rotation solidaire de la carrosserie 3 de la machine à laver la vaisselle 1.

La cuve de lavage 2 comprend au moins un moyen de pulvérisation d'eau 4a, 4b d'un bain de lavage et/ou de rinçage sur les pièces de vaisselle.

Ici et de manière nullement limitative, la cuve de lavage 2 comprend un moulinet d'aspersion d'eau supérieur 4a et un moulinet d'aspersion inférieur 4b.

Une eau d'un bain de lavage et/ou de rinçage est définie comme de l'eau permettant le nettoyage de la vaisselle et circulant dans un circuit hydraulique 5 d'une machine à laver la vaisselle 1. L'origine de l'eau d'un bain de lavage et/ou de rinçage est une eau arrivant du réseau d'alimentation de la machine à laver la vaisselle 1.

La cuve de lavage 2 comprend une paroi supérieure 2a, des parois latérales 2b, une paroi de fond 2c et une paroi inférieure 2d.

La carrosserie 3 de la machine à laver la vaisselle 1 est adaptée à loger la cuve de lavage 2. Ladite cuve de lavage 2 est adaptée à contenir notamment l'eau des bains de lavage et/ou de rinçage des différentes phases d'un cycle de nettoyage.

Au moins un panier à vaisselle (non représenté) est monté à l'intérieur de la cuve de lavage 2.

En particulier, un panier à vaisselle peut être situé dans la partie supérieure de la cuve de lavage 2 et désigné par panier supérieur, et un panier à vaisselle peut être situé dans la partie inférieure de la cuve de lavage 2 et désigné par panier inférieur.

Les paniers à vaisselle peuvent être poussés et retirés en les faisant glisser à l'intérieur de la cuve de lavage 2 de la machine à laver la vaisselle 1 soit après la fin d'un cycle de nettoyage pour le déchargement de la vaisselle soit avant le début d'un cycle de nettoyage pour le chargement de la vaisselle.

Cette machine à laver la vaisselle 1 est munie d'une pompe 6 pour la circulation d'eau d'un bain de lavage et/ou de rinçage dans la cuve de lavage 2.

Dans un exemple de réalisation, et de manière nullement limitative, la machine à laver la vaisselle 1 fonctionne de telle sorte à minimiser le bain de lavage et/ou de rinçage retenu dans un puisard 7 ménagé dans la paroi inférieure 2d de la cuve de lavage 2.

La pompe de circulation d'eau 6 puise l'eau du bain de lavage et/ou de rinçage dans le puisard 7 pour mettre en circulation l'eau du bain de lavage et/ou de rinçage sous pression jusqu'aux moyens de pulvérisation 4a, 4b. Ensuite, le bain de lavage et/ou de rinçage retourne dans le puisard 7.

Cette pompe de circulation d'eau 6 est entraînée par un moteur électrique.

La machine à laver la vaisselle 1 peut également comprendre une pompe de vidange 8 de l'eau usée du bain de lavage et/ou de rinçage.

La pompe de vidange 8 puise l'eau usée du bain de lavage et/ou de rinçage dans le puisard 7 pour évacuer l'eau usée du bain de lavage et/ou de rinçage dans un réseau d'eau usée connecté à la machine à laver la vaisselle 1.

Cette pompe de vidange 8 est entraînée par un moteur électrique.

La machine à laver la vaisselle 1 comprend des moyens de commande (non représentés), et notamment au moins un microcontrôleur, permettant de dérouler des programmes de nettoyage prédéterminés.

On va à présent décrire, en référence aux figures 1 et 2, un échangeur de chaleur comprenant au moins une réserve d'un matériau à accumulation de chaleur d'un appareil de lavage, et en particulier d'une machine à laver la vaisselle, conforme à l'invention.

La machine à laver la vaisselle 1 comprend un échangeur de chaleur 9.

La cuve de lavage 2 contient au moins un bain de lavage et/ou de rinçage utilisé lors d'un cycle de fonctionnement de la machine à laver la vaisselle 1.

L'échangeur de chaleur 9 comprend au moins une réserve d'un matériau à accumulation de chaleur 10 captant l'énergie calorifique d'au moins un premier bain de lavage et/ou de rinçage et restituant ladite énergie calorifique captée à au moins un deuxième bain de lavage et/ou de rinçage.

La machine à laver la vaisselle 1 comprend un réservoir 11 en communication fluidique avec la cuve de lavage 2.

Où lesdits au moins un premier et deuxième bain de liquide de lavage et/ou de rinçage sont mis en circulation successivement entre la cuve de lavage 2 et le réservoir 11.

Le réservoir 11 comporte ladite au moins une réserve d'un matériau à accumulation de chaleur 10 réalisée à partir de particules de matériau à accumulation de chaleur encapsulées 12.

Où le réservoir 11 comprend au moins un élément de maintien 18 des particules de matériau à accumulation de chaleur encapsulées 12 à l'intérieur de celui-ci.

Ainsi, la cuve de lavage 2 et le réservoir 11 comportant des particules de matériau à accumulation de chaleur encapsulées 12 sont couplés de manière fluidique de sorte que lesdits au moins un premier et deuxième bain de lavage et/ou de rinçage puissent circuler depuis ladite cuve de lavage 2 vers ledit réservoir 11 et inversement.

Le réservoir 11 est adapté à contenir au moins en partie un bain de lavage et/ou de rinçage de sorte à créer un échangeur de chaleur 9 entre des particules de matériau à accumulation de chaleur encapsulées 12 dudit réservoir 11 et l'un desdits au moins un premier et deuxième bain de lavage et/ou de rinçage provenant de la cuve de lavage 2.

Le matériau à accumulation de chaleur est contenu dans le réservoir 11 de sorte à absorber ou à restituer l'énergie calorifique d'au moins un bain de lavage et/ou de rinçage mis en circulation entre la cuve de lavage 2 et le réservoir 11 contenant ladite au moins une réserve d'un matériau à accumulation de chaleur 10 réalisée à partir de particules de matériau à accumulation de chaleur encapsulées 12.

Ladite au moins une réserve d'un matériau à accumulation de chaleur 10 réalisée à partir de particules de matériau à accumulation de chaleur encapsulées 12 est également adaptée à stocker l'énergie calorifique captée d'au moins un premier bain de lavage et/ou de rinçage avant de restituer cette énergie calorifique à au moins un deuxième bain de lavage et/ou de rinçage.

Ladite au moins une réserve d'un matériau à accumulation de chaleur 10 réalisée à partir de particules de matériau à accumulation de chaleur encapsulées 12 et placée dans un réservoir 11 couplé de manière fluidique avec la cuve de lavage 2 permet de maximiser la surface d'échange de chaleur entre le matériau à accumulation de chaleur et lesdits au moins un premier et deuxième bain de lavage et/ou de rinçage de sorte à optimiser les échanges thermiques.

Le réservoir 11 comportant des particules de matériau à accumulation de chaleur encapsulées 12 peut ainsi recevoir successivement ledit au moins un premier bain de lavage et/ou de rinçage pour l'absorption d'énergie calorifique par le matériau à accumulation de chaleur et ledit au moins un deuxième bain de lavage et/ou de rinçage pour la récupération d'énergie calorifique absorbée par ledit matériau à accumulation de chaleur.

De cette manière, les phases d'échange de chaleur entre le matériau à accumulation de chaleur et lesdits au moins un premier et deuxième bain de lavage et/ou de rinçage sont raccourcies et d'efficacité améliorée tout en simplifiant la structure de la machine à laver la vaisselle 1 et l'industrialisation de celle-ci.

Lors du remplissage du réservoir 11 comportant des particules de matériau à accumulation de chaleur encapsulées 12 par lesdits au moins un premier et deuxième bain de liquide de lavage et/ou de rinçage, lesdites particules de matériau à accumulation de chaleur encapsulées 12 sont entourées par lesdits au moins un premier et deuxième bain de liquide de lavage et/ou de rinçage.

Ainsi, les échanges de chaleur entre le matériau à accumulation de chaleur des particules encapsulées 12 et lesdits au moins un premier et deuxième bain de liquide de lavage et/ou de rinçage sont optimisés grâce à une surface d'échange de chaleur maximale.

En outre, le matériau à accumulation de chaleur étant divisé en particules encapsulées, la surface d'échange de chaleur entre le matériau à accumulation de chaleur et lesdits au moins un premier et deuxième bain de lavage est optimisée de sorte à améliorer les échanges thermiques et à réutiliser pour chauffer au moins un deuxième bain de lavage et/ou de rinçage un maximum d'énergie calorifique dépensée lors du chauffage d'au moins un premier bain de lavage et/ou de rinçage.

La taille des particules de matériau à accumulation de chaleur encapsulées 12 peut s'étendre dans une plage comprise entre 1 mm et 10mm, et de préférence de l'ordre de 3mm.

Bien entendu, la taille des particules de matériau à accumulation de chaleur encapsulées n'est nullement limitative et peut être différente.

La taille des particules de matériau à accumulation de chaleur encapsulées 12 permet ainsi d'obtenir des échanges de chaleur à l'intérieur du matériau à accumulation de chaleur rapides et complets.

Par ailleurs, l'encapsulation des particules de matériau à accumulation de chaleur 12 empêche de mélanger le matériau à accumulation de chaleur avec au moins un bain de lavage et/ou de rinçage.

Le réservoir 11 comportant des particules de matériau à accumulation de chaleur encapsulées 12 peut être situé à l'intérieur de la machine à laver la vaisselle 1, et en particulier entre la cuve de lavage 2 et la carrosserie 3 de la machine à laver la vaisselle 1.

Le réservoir 11 comportant des particules de matériau à accumulation de chaleur encapsulées 12 peut être fixé par des moyens de fixation (non représentés) sur la carrosserie 3 de la machine à laver la vaisselle 1 ou sur la cuve de lavage 2.

La fixation du réservoir 11 met en oeuvre des moyens de fixation classiques, par exemple du type par vissage, encliquetage élastique. Ces moyens de fixations sont bien connus de l'homme du métier et n'ont pas besoin d'être décrits plus en détail ici.

Dans un mode de réalisation de l'invention, le réservoir 11 est couplé de manière fluidique à la cuve de lavage 2 au travers de la pompe de circulation d'eau 6.

Ainsi, l'eau d'au moins un bain de lavage et/ou de rinçage peut être mise en circulation depuis la cuve de lavage 2 jusqu'au réservoir 11 comportant des particules de matériau à accumulation de chaleur encapsulées 12 au moyen de la pompe de circulation d'eau 6.

La pompe de circulation d'eau 6 est reliée en entrée au puisard 7 de la cuve de lavage 2, par exemple par une conduite.

Et la pompe de circulation d'eau 6 est reliée en sortie à une conduite d'alimentation en eau 13 et cette conduite d'alimentation en eau 13 est reliée au réservoir 11 comportant des particules de matériau à accumulation de chaleur encapsulées 12.

L'alimentation en eau d'au moins un bain de lavage et/ou de rinçage depuis la cuve de lavage 2 jusqu'au réservoir 11 comportant des particules de matériau à accumulation de chaleur encapsulées 12 peut être contrôlée au moyen d'une vanne 14 et de la pompe de circulation d'eau 6. La vanne 14 et la pompe de circulation d'eau 6 sont commandées par des moyens de commande de la machine à laver la vaisselle 1, tel que par exemple un microcontrôleur.

La vanne 14 est située sur la conduite d'alimentation en eau 13 reliant la pompe de circulation d'eau 6 au réservoir 11 comportant des particules de matériau à accumulation de chaleur encapsulées 12.

L'alimentation en eau d'au moins un bain de lavage et/ou de rinçage depuis la cuve de lavage 2 jusqu'audit au moins un moyen de pulvérisation d'eau 4a, 4b peut être contrôlée au moyen d'un moyen de répartition d'eau 15 et de la pompe de circulation d'eau 6. Le moyen de répartition d'eau 15 et la pompe de circulation d'eau 6 sont commandés par des moyens de commande de la machine à laver la vaisselle 1, tel que par exemple un microcontrôleur.

Dans un mode de réalisation illustré aux figures 1 et 2, le réservoir 11 est connecté au circuit hydraulique de distribution d'eau 5 en amont d'un moyen de répartition d'eau 15.

Ainsi, l'eau contenue dans la cuve de lavage 2 provenant d'au moins un bain de lavage et/ou de rinçage est :
- soit uniquement dirigée vers le réservoir 11 lorsque le moyen de répartition d'eau 15 est dans une première position de sorte à remplir en eau ledit réservoir 11 et à bloquer l'alimentation en eau dudit au moins au moins un moyen d'aspersion d'eau 4a, 4b ;
- soit uniquement dirigée vers ledit au moins un moyen d'aspersion d'eau 4a, 4b lorsque le moyen de répartition d'eau 15 est dans une deuxième position de sorte à alimenter en eau ledit au moins au moins un moyen d'aspersion d'eau 4a, 4b et à bloquer l'alimentation en eau dudit réservoir 11.

De cette manière, le moyen de répartition d'eau 15 comprend au moins deux positions de sorte à alimenter en eau alternativement soit le réservoir 11 soit ledit au moins un moyen d'aspersion d'eau 4a, 4b.

Avantageusement, le moyen de répartition d'eau 15 est un clapet à disque rotatif multi - positions. Le positionnement du disque rotatif à l'intérieur du clapet permet d'obturer ou de libérer des ouvertures de passage d'eau de sorte à contrôler l'alimentation en eau de chacun des organes du circuit hydraulique de distribution d'eau. Le moyen de répartition d'eau 15 est contrôlé par les moyens de commande de la machine à laver la vaisselle 1, tel que par exemple un microcontrôleur.

Dans ce mode de réalisation de l'invention, le remplissage en eau du réservoir 11 est mis en oeuvre par des moyens de commande de la machine à laver la vaisselle 1, tel que par exemple un microcontrôleur, commandant le moyen de répartition d'eau 15 dans une première position, soit dans un état fermé, de sorte qu'au moins une conduite de circulation d'eau 20a, 20b alimentant en eau ledit au moins un moyen d'aspersion d'eau 4a, 4b soit obturée.

Ainsi, suite à l'ouverture de la vanne 14 montée sur la conduite de circulation d'eau 13 reliant la pompe de circulation d'eau 6 au réservoir 11, la pompe de circulation d'eau 6 envoie l'eau dans la conduite de circulation d'eau 13 puis dans le réservoir 11 de sorte à remplir en eau ce dernier.

Dans un autre mode de réalisation de l'invention, le moyen de répartition d'eau 15 peut comprendre plus de deux positions de sorte à alimenter en eau d'une part alternativement le réservoir 11 et ledit au moins un moyen d'aspersion d'eau 4a, 4b et d'autre part simultanément le réservoir 11 et ledit au moins un moyen d'aspersion d'eau 4a, 4b.

L'eau contenue dans la cuve de lavage 2 provenant d'au moins un bain de lavage et/ou de rinçage peut également être répartie entre ledit réservoir 11 et ledit au moins un moyen d'aspersion d'eau 4a, 4b lorsque le moyen de répartition d'eau 15 est dans une troisième position, ou encore répartie entre plusieurs moyens d'aspersion d'eau 4a, 4b lorsque le moyen de répartition d'eau 15 est dans une quatrième position en fonction du nombre de positions dudit moyen de répartition d'eau 15.

Dans un autre mode de réalisation non illustré, la conduite de circulation d'eau 13 reliée au réservoir de stockage d'eau 11 est connectée directement à un moyen de distribution d'eau, où ledit moyen de distribution d'eau alimente en eau soit ledit au moins un moyen d'aspersion d'eau 4a, 4b soit ledit réservoir de stockage d'eau 11 au moyen de ladite pompe de circulation d'eau 6.

Ainsi, la conduite de circulation d'eau 13 est connectée directement au moyen de distribution d'eau garantissant une alimentation en eau exclusivement soit vers le réservoir de stockage d'eau 11 soit vers ledit au moins un moyen d'aspersion d'eau 4a, 4b.

Le moyen de distribution d'eau peut être un composant hydraulique comprenant un élément en déplacement de sorte à distribuer de l'eau au travers de différentes conduites de circulation d'eau 13, 20a, 20b, où ledit élément en déplacement est actionné par exemple par un thermo actionneur ou un moteur.

Dans un mode de réalisation de l'invention, l'ouverture et la fermeture de la vanne 14 sont mises en oeuvre électriquement au travers des moyens de commande de la machine à laver la vaisselle 1.

Dans un autre mode de réalisation, l'ouverture de la vanne 14 est mise en oeuvre par la pression de l'eau dans le circuit hydraulique de distribution d'eau 5 liée à la mise en fonctionnement de la pompe de circulation d'eau 6 lorsque le moyen de répartition d'eau 12 est en position fermée.

La vanne 14 peut comprendre un élément de rappel élastique d'un élément d'obturation (non représenté) permettant d'obturer le passage d'eau à l'intérieur de ladite vanne 14 lorsque la pression dans la conduite 21 du circuit hydraulique de distribution d'eau 5 exercée par la pompe de circulation d'eau 6 est inférieure à une valeur prédéterminée.

La pression dans la conduite 21 du circuit hydraulique de distribution d'eau 5 augmente lorsque la partie 5b dudit circuit hydraulique de distribution d'eau 5 est fermée par le moyen de répartition d'eau 15 et que la pompe de circulation d'eau 6 est mise en fonctionnement.

Dès que la pression exercée par la pompe de circulation d'eau 6 dans la conduite 21 du circuit hydraulique de distribution d'eau 5 dépasse la valeur prédéterminée permettant le déplacement de l'élément d'obturation de la vanne 14, la vanne 14 est en position ouverte de sorte à remplir en eau le réservoir de stockage d'eau 11.

La vanne 14 est en position fermée au moyen de l'élément de rappel élastique ramenant l'élément d'obturation en position initiale dès que la pression dans la conduite 21 du circuit hydraulique de distribution d'eau 5 diminue en dessous de la valeur prédéterminée.

De cette manière, l'eau contenue dans le réservoir de stockage d'eau 11 est contenue à l'intérieur de celui-ci dès la fermeture de la vanne 14 et les moyens d'aspersion d'eau 4a, 4b peuvent être alimentés en eau par le déplacement du moyen de répartition d'eau 15 en position d'alimentation en eau desdits moyens d'aspersion d'eau 4a, 4b et la mise en fonctionnement de la pompe de circulation d'eau 6.

L'étanchéité de la vanne 14 est garantie par l'élément de rappel élastique de l'élément d'obturation de ladite vanne 14.

Lorsque la vanne 14 est en position fermée, l'étanchéité de ladite vanne 14 est renforcée par la pression de l'eau contenue dans le réservoir de stockage d'eau 11 exercée sur l'élément d'obturation de ladite vanne 14. La pression de l'eau contenue dans le réservoir de stockage d'eau 11 exercée sur l'élément d'obturation de la vanne 14 est dirigée dans la même direction que la pression exercée par l'élément de rappel élastique de l'élément d'obturation de ladite vanne 14.

La vanne 14 est ouverte électriquement par les moyens de commande de la machine à laver la vaisselle 1 de sorte à évacuer l'eau du réservoir de stockage 11 vers la cuve de lavage 2.

Dans le mode de réalisation illustré aux figures 1 et 2, la conduite de circulation d'eau 13 est connectée sur une conduite de circulation d'eau 21 reliant la pompe de circulation d'eau 6 au moyen de répartition d'eau 15 puis à au moins un moyen d'aspersion d'eau 4a, 4b de sorte que la partie 5a du circuit hydraulique de distribution d'eau 5 est reliée à la partie 5b dudit circuit hydraulique de distribution d'eau 5.

La pompe de circulation d'eau 6 peut ainsi alimenter en eau d'au moins bain de lavage et/ou de rinçage ledit au moins un moyen de pulvérisation d'eau 4a, 4b et le réservoir 11 comportant des particules de matériau à accumulation de chaleur encapsulées 12.

La pompe de circulation d'eau 6 peut alimenter en eau d'au moins bain de lavage et/ou de rinçage ledit au moins un moyen de pulvérisation d'eau 4a, 4b et le réservoir 11 comportant des particules de matériau à accumulation de chaleur encapsulées 12 soit simultanément soit indépendamment.

Le réservoir 11 comportant des particules de matériau à accumulation de chaleur encapsulées 12 comporte une ouverture d'alimentation en eau 16 d'au moins un bain de lavage et/ou de rinçage située en partie inférieure.

Le réservoir 11 comportant des particules de matériau à accumulation de chaleur encapsulées 12 est également couplé de manière fluidique avec la cuve de lavage 2 au moyen d'une connexion 19 pouvant être réalisée par une conduite.

Ainsi, la connexion 19 entre le réservoir 11 comportant des particules de matériau à accumulation de chaleur encapsulées 12 et la cuve de lavage 2 permet d'évacuer l'air contenu dans ledit réservoir 11 lors de l'introduction d'eau d'au moins un bain de lavage et/ou de rinçage dans ledit réservoir 11 par l'ouverture d'alimentation en eau 16.

La connexion 19 entre le réservoir 11 comportant des particules de matériau à accumulation de chaleur encapsulées 12 et la cuve de lavage 2 peut également permettre d'évacuer l'eau d'au moins un bain de lavage et/ou de rinçage introduite dans ledit réservoir 11 dans la cuve de lavage 2.

Préférentiellement, le réservoir 11 comportant des particules de matériau à accumulation de chaleur encapsulées 12 est situé verticalement le long d'une paroi 2b de la cuve de lavage 2 et s'étend entre une ouverture d'alimentation en eau 16 et une ouverture de sortie d'air et/ou d'eau 17.

L'ouverture de sortie 17 du réservoir 11 peut servir pour réaliser une mise à l'air connectée avec la cuve de lavage 2, pour déverser le trop plein d'eau d'au moins un bain de lavage et/ou de rinçage introduit à l'intérieur dudit réservoir 11 vers la cuve de lavage 2, et/ou pour mettre l'eau d'au moins un bain de lavage et/ou de rinçage en circulation depuis l'intérieur dudit réservoir 11 vers la cuve de lavage 2.

En particulier, l'eau d'au moins un bain de lavage et/ou de rinçage peut être en circulation depuis l'intérieur du réservoir 11 vers la cuve de lavage 2 si ledit réservoir 11 a une contenance insuffisante pour recevoir l'ensemble d'au moins un bain de lavage et/ou de rinçage en plus de ladite au moins une réserve d'un matériau à accumulation de chaleur 10.

L'ouverture de sortie 17 du réservoir 11 est préférentiellement située en partie supérieure dudit réservoir 11.

Par ailleurs, l'ouverture d'alimentation en eau 16 du réservoir 11 peut également servir à vidanger complètement ledit réservoir 11 de l'eau d'au moins un bain de lavage et/ou de rinçage introduite à l'intérieur dudit réservoir 11.

Pratiquement, ledit au moins un élément de maintien 18 des particules de matériau à accumulation de chaleur encapsulées 12 à l'intérieur du réservoir 11 est au moins une grille, tel qu'illustré à la figure 1.

Ladite au moins une grille est fixée sur le réservoir 11 comportant des particules de matériau à accumulation de chaleur encapsulées 12, en particulier au niveau de l'ouverture d'alimentation en eau 16 et éventuellement au niveau de l'ouverture de sortie 17.

La fixation de ladite au moins une grille au réservoir comportant des particules de matériau à accumulation de chaleur encapsulées met en oeuvre des moyens de fixation classiques, par exemple du type par collage, vissage, encliquetage élastique. Ces moyens de fixations sont bien connus de l'homme du métier et n'ont pas besoin d'être décrits plus en détail ici.

Ledit au élément de maintien 18 du réservoir 11 réalisé à partir d'au moins une grille comporte des ouvertures de section adaptée à la taille des particules de matériau à accumulation de chaleur encapsulées 12 de sorte à retenir lesdites particules de matériau à accumulation de chaleur encapsulées 12 à l'intérieur dudit réservoir 11, notamment lors de l'introduction d'au moins un bain de lavage et/ou de rinçage depuis la cuve de lavage 2 à l'intérieur du réservoir 11 et lors de l'évacuation d'au moins un bain de lavage et/ou de rinçage depuis le réservoir 11 vers la cuve de lavage 2.

Les particules de matériau à accumulation de chaleur encapsulées 12 peuvent ainsi être disposées directement à l'intérieur du réservoir 11 et sont maintenues à l'intérieur de celui-ci par ladite au moins une grille.

Dans un autre mode de réalisation de l'invention tel qu'illustré à la figure 2, ledit au moins un élément de maintien 18 desdites particules de matériau à accumulation de chaleur encapsulées 12 à l'intérieur du réservoir 11 est au moins un dispositif de retenue en forme d'entonnoir.

Ledit au moins un dispositif de retenue en forme d'entonnoir est fixé sur le réservoir 11 comportant des particules de matériau à accumulation de chaleur encapsulées 12 ou intégré dans les parois dudit réservoir 11, en particulier au niveau de l'ouverture d'alimentation en eau 16 et éventuellement au niveau de l'ouverture de sortie 17.

Dans le cas de la fixation dudit au moins un dispositif de retenue en forme d'entonnoir au réservoir comportant des particules de matériau à accumulation de chaleur encapsulées, celle-ci met en oeuvre des moyens de fixation classiques, par exemple du type par collage, vissage, encliquetage élastique. Ces moyens de fixations sont bien connus de l'homme du métier et n'ont pas besoin d'être décrits plus en détail ici.

Ledit au moins un dispositif de retenue en forme d'entonnoir peut être réalisé à partir de nervures s'étendant depuis les parois du réservoir 11 comportant des particules de matériau à accumulation de chaleur encapsulées vers la zone centrale dudit réservoir 11.

Ledit au moins un dispositif de retenue en forme d'entonnoir permet de retenir des salissures et/ou des éléments en suspension, et notamment des fibres, dans au moins un bain de lavage et/ou de rinçage mis en circulation au travers du réservoir 11 comportant des particules de matériau à accumulation de chaleur encapsulées.

Ledit au élément de maintien 18 du réservoir 11 réalisé à partir d'au moins un dispositif de retenue en forme d'entonnoir comporte au moins une ouverture de section adaptée à la taille des particules de matériau à accumulation de chaleur encapsulées 12 de sorte à retenir lesdites particules de matériau à accumulation de chaleur encapsulées 12 à l'intérieur dudit réservoir 11, notamment lors de l'introduction d'au moins un bain de lavage et/ou de rinçage depuis la cuve de lavage 2 à l'intérieur du réservoir 11 et lors de l'évacuation d'au moins un bain de lavage et/ou de rinçage depuis le réservoir 11 vers la cuve de lavage 2.

Les particules de matériau à accumulation de chaleur encapsulées 12 peuvent ainsi être disposées directement à l'intérieur du réservoir 11 et sont maintenues à l'intérieur de celui-ci par ledit au moins un dispositif de retenue en forme d'entonnoir.

Préférentiellement, le réservoir 11 comprend un élément de maintien 18 situé au niveau de l'ouverture d'alimentation en eau 16 et un élément de maintien 18 situé au niveau de l'ouverture de sortie 17, tel qu'illustré à la figure 1.

Bien entendu, le nombre d'élément de maintien des particules de matériau à accumulation de chaleur encapsulées à l'intérieur du réservoir n'est nullement limitatif et peut être différent.

Dans un mode de réalisation de l'invention (non représenté), le réservoir 11 comporte plusieurs réserves d'un matériau à accumulation de chaleur 10 réalisées à partir de particules de matériau à accumulation de chaleur encapsulées 12.

Ainsi, les particules de matériau à accumulation de chaleur encapsulées 12 sont réparties dans différentes réserves d'un matériau à accumulation de chaleur 10 et non entassées les unes sur les autres dans une même réserve d'un matériau à accumulation de chaleur 10.

En outre, les particules de matériau à accumulation de chaleur encapsulées 12 ne sont pas regroupées ensemble par flottaison en partie supérieure du réservoir 11 suite au remplissage de celui-ci avec au moins un bain de lavage et/ou de rinçage.

De cette manière, le réservoir 11 comportant plusieurs réserves d'un matériau à accumulation de chaleur 10 permet d'améliorer les échanges thermiques entre les particules de matériau à accumulation de chaleur encapsulées 12 et au moins un bain de lavage et/ou de rinçage.

Le positionnement de plusieurs réserves d'un matériau à accumulation de chaleur 10 les unes au-dessus des autres dans le réservoir 11 permet de réaliser une stratification thermique des échanges thermiques entre les particules de matériau à accumulation de chaleur encapsulées 12 et au moins un bain de lavage et/ou de rinçage.

Chacune des réserves d'un matériau à accumulation de chaleur 10 du réservoir 11 sont réalisées par l'emploi d'éléments de maintien 18 des particules de matériau à accumulation de chaleur encapsulées 12.

De cette manière, le réservoir 11 peut comporter un élément de maintien 18 situé au niveau de l'ouverture d'alimentation en eau 16, un élément de maintien 18 situé au niveau de l'ouverture de sortie 17, et un ou plusieurs éléments de maintien 18 entre l'ouverture d'alimentation en eau 16 et l'ouverture de sortie 17 de sorte à constituer plusieurs réserves d'un matériau à accumulation de chaleur 10.

L'épaisseur du film d'encapsulation des particules de matériau à accumulation de chaleur est inférieure à 1 mm, et de préférence inférieure à 0,5mm.

Bien entendu, l'épaisseur du film d'encapsulation des particules de matériau à accumulation de chaleur n'est nullement limitative et peut être différente.

Le matériau de l'enveloppe d'encapsulation des particules de matériau à accumulation de chaleur peut être par exemple un silicone ou un polyamide.

Bien entendu, le matériau de l'enveloppe d'encapsulation des particules de matériau à accumulation de chaleur n'est nullement limitatif et peut être différent.

L'enveloppe d'encapsulation des particules de matériau à accumulation de chaleur 12 est réalisée dans un matériau résistant aux agents lessiviels dudit au moins un bain de lavage et/ou de rinçage.

L'enveloppe d'encapsulation des particules à accumulation de chaleur 12 est également réalisée dans un matériau résistant à une température dudit au moins un bain de lavage et/ou de rinçage.

L'enveloppe d'encapsulation des particules à accumulation de chaleur 12 est adaptée à être utilisée lors de l'accumulation de chaleur provenant d'au moins un bain de lavage et/ou de rinçage dans une plage de température comprise entre 35°C et 90°C.

Préférentiellement, les particules de matériau à accumulation de chaleur encapsulées 12 comporte un matériau à changement de phase.

Et la température de changement de phase du matériau à accumulation de chaleur de la poche 12 est comprise dans une plage de température pouvant s'étendre entre 30 °C et 40 °C.

Bien entendu, la température de changement de phase du matériau à accumulation de chaleur n'est nullement limitative et peut être différente.

Le matériau à changement de phase de ladite au moins une réserve d'un matériau à accumulation de chaleur 10 peut être notamment de la paraffine, de l'huile de palme, ou encore un acide gras saturé.

Bien entendu, le type de matériau à changement de phase n'est nullement limitatif et peut être différent.

L'enveloppe d'encapsulation des particules à accumulation de chaleur 12 est également adaptée à résister à des contraintes physiques liées notamment :
- à des vibrations et/ou des chocs lors du transport de l'appareil de lavage 1 et/ou lors de la mise en oeuvre d'un cycle de fonctionnement de l'appareil de lavage 1 ;
- à des chocs thermiques lors de la mise en oeuvre d'un cycle de fonctionnement de l'appareil de lavage 1 et/ou à des températures extrêmes lors du transport de l'appareil de lavage 1 ;
- à sa propre masse tout au long de la durée de vie de l'appareil de lavage 1.

Préférentiellement, le réservoir 11 comportant ladite au moins une réserve d'un matériau à accumulation de chaleur 10 est isolé thermiquement.

Ainsi, l'énergie calorifique d'au moins un bain de lavage et/ou de rinçage captée par ladite au moins une réserve d'un matériau à accumulation de chaleur 10 est conservée pendant une durée plus longue de sorte à restituer la plus grande partie de cette énergie calorifique captée lors d'une phase suivante d'un cycle de fonctionnement en cours ou lors d'une phase d'un cycle de fonctionnement suivant mis en oeuvre par la machine à laver la vaisselle 1.

L'isolant thermique du réservoir 11 peut être par exemple du polystyrène expansé ou du feutre.

Bien entendu, l'isolant thermique du réservoir n'est nullement limitatif et peut être différent.

On va décrire à présent un procédé de commande en fonctionnement d'un appareil de lavage conforme à l'invention.

Le procédé comprend au moins les étapes suivantes:
- introduction successive desdits au moins un premier et deuxième bain de lavage et/ou de rinçage depuis la cuve de lavage 2 à l'intérieur d'un réservoir 11 comportant ladite au moins une réserve d'un matériau à accumulation de chaleur 10 réalisée à partir de particules de matériau à accumulation de chaleur encapsulées 12,
- où ledit réservoir 11 comprend au moins un élément de maintien 18 desdites particules de matériau à accumulation de chaleur encapsulées 12 à l'intérieur de celui-ci.

Ainsi, au moins un premier bain de lavage et/ou de rinçage est introduit depuis la cuve de lavage 2 dans le réservoir 11 comportant des particules de matériau à accumulation de chaleur encapsulées 12 pour récupérer l'énergie calorifique dudit au moins un premier bain de lavage et/ou de rinçage. Et au moins un deuxième bain de lavage et/ou de rinçage est introduit depuis la cuve de lavage 2 dans le réservoir 11 comportant des particules de matériau à accumulation de chaleur encapsulées 12 pour restituer l'énergie calorifique captée audit au moins un deuxième bain de lavage et/ou de rinçage.

Lesdits au moins un premier et deuxième bain de lavage et/ou de rinçage introduits dans le réservoir 11 échangent de la chaleur avec ladite au moins une réserve d'un matériau à accumulation de chaleur 10 logée à l'intérieur dudit réservoir 11 et réalisée à partir de particules de matériau à accumulation de chaleur encapsulées 12 de sorte que ledit matériau à accumulation de chaleur absorbe l'énergie calorifique dudit au moins un premier bain de lavage et/ou de rinçage et que ledit matériau à accumulation de chaleur restitue l'énergie calorifique captée audit au moins un deuxième bain de lavage et/ou de rinçage.

Les échanges de chaleur se produisent directement entre au moins un bain de lavage et/ou de rinçage et les particules de matériau à accumulation de chaleur encapsulées 12 à l'intérieur du réservoir 11.

Les particules de matériau à accumulation de chaleur encapsulées 12 peuvent être soit en suspension dans l'eau d'au moins un bain de lavage et/ou de rinçage introduite dans le réservoir 11 soit regroupées en partie inférieure du réservoir 11 suite à l'introduction de l'eau d'au moins un bain de lavage et/ou de rinçage dans ledit réservoir 11.

Le positionnement des particules de matériau à accumulation de chaleur encapsulées 12 suite à l'introduction de l'eau d'au moins un bain de lavage et/ou de rinçage dans ledit réservoir 11 est fonction du matériau à accumulation de chaleur et de la densité de celui-ci.

L'étape d'introduction dudit au moins un premier bain de lavage et/ou de rinçage depuis la cuve de lavage 2 à l'intérieur du réservoir 11 est suivie d'une étape de récupération de l'énergie calorifique dudit au moins un premier bain de lavage et/ou de rinçage par les particules de matériau à accumulation de chaleur encapsulées 12.

Lors de l'étape de récupération de l'énergie calorifique dudit au moins un premier bain de lavage et/ou de rinçage par les particules de matériau à accumulation de chaleur encapsulées 12 comportant un matériau à changement de phase, le matériau à changement de phase encapsulé dans des enveloppes passe de l'état solide à l'état liquide de sorte à récupérer l'énergie calorifique dudit au moins un premier bain de lavage et/ou de rinçage.

L'étape de récupération de l'énergie calorifique dudit au moins un premier bain de lavage et/ou de rinçage est suivie d'une étape d'évacuation dudit au moins un premier bain de lavage et/ou de rinçage depuis le réservoir 11 vers la cuve de lavage 2 et/ou vers un réseau d'eau usée.

Dans un mode de réalisation, suite à l'étape de récupération de l'énergie calorifique dudit au moins un premier bain de lavage et/ou de rinçage par ladite au moins une réserve d'un matériau à accumulation de chaleur 10, l'eau dudit au moins un premier bain de lavage et/ou de rinçage est évacuée dans la cuve de lavage 2, et en particulier dans le puisard 7. Puis, cette eau dudit au moins un premier bain de lavage et/ou de rinçage est évacuée vers un réseau d'eau usée au moyen de la pompe de vidange 8.

Dans un autre mode de réalisation, suite à l'étape de récupération de l'énergie calorifique dudit au moins un premier bain de lavage et/ou de rinçage par ladite au moins une réserve d'un matériau à accumulation de chaleur 10, l'eau dudit au moins un premier bain de lavage et/ou de rinçage peut être évacuée directement vers un réseau d'eau usée au moyen d'une pompe de vidange.

Dans un autre mode de réalisation, une étape de conservation dudit au moins un premier bain de lavage et/ou de rinçage en contact avec ladite au moins une réserve d'un matériau à accumulation de chaleur 10 dans le réservoir 11 est mise en oeuvre entre l'étape de récupération de l'énergie calorifique dudit au moins un premier bain de lavage et/ou de rinçage et l'étape d'évacuation dudit au moins un premier bain de lavage et/ou de rinçage depuis ledit réservoir 11 vers la cuve de lavage 2 de sorte à réutiliser ledit au moins un premier bain de lavage et/ou de rinçage au cours d'un cycle de fonctionnement suivant mis en oeuvre par l'appareil de lavage 1.

De cette manière, ledit au moins un premier bain de lavage et/ou de rinçage est réutilisé au cours d'un cycle de fonctionnement suivant mis en oeuvre par l'appareil de lavage 1 tout en récupérant un maximum d'énergie calorifique provenant du cycle de fonctionnement précédent.

Lors de la mise en oeuvre d'une phase du cycle de fonctionnement suivant par l'appareil de lavage 1, ledit au moins un premier bain de lavage et/ou de rinçage conservé en contact avec ladite au moins une réserve d'un matériau à accumulation de chaleur 10 dans le réservoir 11 est évacué dudit réservoir 11 vers le puisard 7 de la cuve de lavage 2 par l'ouverture de la vanne 14, où la pompe de circulation d'eau 6 est maintenue à l'arrêt.

Et ensuite, ledit au moins un premier bain de lavage et/ou de rinçage réutilisé est soit évacué de l'appareil de lavage 1 vers un réseau d'eau usée au moyen de la pompe de vidange 8 soit de nouveau retourné dans le réservoir 11 par la mise en fonctionnement de la pompe de circulation d'eau 6 et l'ouverture de la vanne 14.

Lorsqu'une étape de conservation dudit au moins un premier bain de lavage et/ou de rinçage en contact avec ladite au moins une réserve d'un matériau à accumulation de chaleur 10 dans le réservoir 11 est mise en oeuvre par l'appareil de lavage 1, ledit au moins un premier bain de lavage et/ou de rinçage est introduit dans le réservoir 11 au cours d'un premier cycle de fonctionnement mis en oeuvre par l'appareil de lavage 1 et ledit au moins un deuxième bain de lavage et/ou de rinçage est introduit dans le réservoir 11 au cours d'un deuxième cycle de fonctionnement mis en oeuvre par l'appareil de lavage 1 et suivant ledit premier cycle de fonctionnement.

Lors de l'étape d'évacuation dudit au moins un premier bain de lavage et/ou de rinçage depuis le réservoir 11 vers la cuve de lavage 2, les particules de matériau à accumulation de chaleur encapsulées 12 sont retenues dans le réservoir 11 au moyen dudit au moins un élément de maintien 18.

L'étape d'introduction dudit au moins un deuxième bain de lavage et/ou de rinçage depuis la cuve de lavage 2 à l'intérieur dudit réservoir 11 est suivie d'une étape de restitution de l'énergie calorifique captée par les particules de matériau à accumulation de chaleur encapsulées 12.

Lors de l'étape de restitution de l'énergie calorifique captée audit au moins un deuxième bain de lavage et/ou de rinçage par les particules de matériau à accumulation de chaleur encapsulées 12 comportant un matériau à changement de phase, le matériau à changement de phase encapsulé dans des enveloppes passe de l'état liquide à l'état solide de sorte à restituer l'énergie calorifique captée précédemment audit au moins un deuxième bain de lavage et/ou de rinçage.

L'étape de restitution de l'énergie calorifique captée est suivie d'une étape d'évacuation dudit au moins un deuxième bain de lavage et/ou de rinçage depuis le réservoir 11 vers la cuve de lavage 2.

Dans un mode de réalisation, suite à l'étape de restitution de l'énergie calorifique captée audit au moins un deuxième bain de lavage et/ou de rinçage par ladite au moins une réserve d'un matériau à accumulation de chaleur 10, l'eau dudit au moins un deuxième bain de lavage et/ou de rinçage est évacuée dans la cuve de lavage 2, et en particulier dans le puisard 7. Puis, cette eau dudit au moins un deuxième bain de lavage et/ou de rinçage peut être évacuée vers un réseau d'eau usée au moyen de la pompe de vidange 8.

Dans un autre mode de réalisation, une étape de conservation dudit au moins un deuxième bain de lavage et/ou de rinçage en contact avec ladite au moins une réserve d'un matériau à accumulation de chaleur 10 dans le réservoir 11 est mise en oeuvre entre l'étape de restitution de l'énergie calorifique captée et l'étape d'évacuation dudit au moins un deuxième bain de lavage et/ou de rinçage depuis le réservoir 11 vers la cuve de lavage 2 de sorte à réutiliser ledit au moins un deuxième bain de lavage et/ou de rinçage au cours d'un cycle de fonctionnement suivant mis en oeuvre par l'appareil de lavage 1.

De cette manière, ledit au moins un deuxième bain de lavage et/ou de rinçage est réutilisé au cours d'un cycle de fonctionnement suivant mis en oeuvre par l'appareil de lavage 1 tout en récupérant un maximum d'énergie calorifique provenant du cycle de fonctionnement précédent.

Lors de la mise en oeuvre d'une phase du cycle de fonctionnement suivant par l'appareil de lavage 1, ledit au moins un deuxième bain de lavage et/ou de rinçage conservé en contact avec ladite au moins une réserve d'un matériau à accumulation de chaleur 10 dans le réservoir 11 est évacué dudit réservoir 11 vers le puisard 7 de la cuve de lavage 2 par l'ouverture de la vanne 14, où la pompe de circulation d'eau 6 est maintenue à l'arrêt.

Et ensuite, ledit au moins un deuxième bain de lavage et/ou de rinçage réutilisé est soit évacué de l'appareil de lavage 1 vers un réseau d'eau usée au moyen de la pompe de vidange 8 soit de nouveau retourné dans le réservoir 11 par la mise en fonctionnement de la pompe de circulation d'eau 6 et l'ouverture de la vanne 14.

Lors de l'étape d'évacuation dudit au moins un deuxième bain de lavage et/ou de rinçage depuis le réservoir 11 vers la cuve de lavage 2, les particules de matériau à accumulation de chaleur encapsulées 12 sont retenues dans le réservoir 11 au moyen dudit au moins un élément de maintien 18.

Lors des étapes d'échange de chaleur mises en oeuvre par l'échangeur de chaleur 9, l'eau dudit au moins un premier et deuxième bain de lavage et/ou de rinçage est introduite dans ledit réservoir 11 et mise en contact avec les particules de matériau à accumulation de chaleur encapsulées 12 de sorte à respectivement récupérer l'énergie calorifique dudit au moins un premier bain de lavage et/ou de rinçage par les particules de matériau à accumulation de chaleur encapsulées 12 et restituer l'énergie calorifique captée par les particules de matériau à accumulation de chaleur encapsulées 12 audit au moins un deuxième bain de lavage et/ou de rinçage.

L'eau dudit au moins un premier et deuxième bain de lavage et/ou de rinçage monte dans le réservoir 11, entoure les particules de matériau à accumulation de chaleur encapsulées 12 et soit les particules de matériau à accumulation de chaleur encapsulées 12 absorbent l'énergie calorifique dudit au moins un premier bain de lavage et/ou de rinçage soit les particules de matériau à accumulation de chaleur encapsulées 12 restituent l'énergie calorifique captée audit au moins un deuxième bain de lavage et/ou de rinçage.

Les particules de matériau à accumulation de chaleur encapsulées 12 permettent d'augmenter la surface d'échange de chaleur et par conséquent d'améliorer l'échange de chaleur entre le matériau à accumulation de chaleur et lesdits au moins un premier et second bain de lavage et/ou de rinçage.

Suite à un échange de chaleur entre le matériau à accumulation de chaleur et l'un desdits au moins un premier et second bain de lavage et/ou de rinçage, le réservoir 11 est vidé respectivement de l'un desdits au moins un premier et second bain de lavage et/ou de rinçage.

Les particules de matériau à accumulation de chaleur encapsulées 12 sont maintenues à l'intérieur du réservoir 11 et reste dans celui-ci lors de l'évacuation de l'un desdits au moins un premier et second bain de lavage et/ou de rinçage dudit réservoir 11.

Le matériau à accumulation de chaleur est conservé à l'intérieur des enveloppes d'encapsulation au cours des différentes étapes du procédé.

Dans un premier mode de réalisation de l'invention, l'au moins un des premier et deuxième bain de lavage et/ou de rinçage est stocké à l'intérieur du réservoir 11 respectivement lors des étapes de récupération d'énergie calorifique et de restitution de l'énergie calorifique captée.

Bien entendu, les premier et deuxième bains de lavage et/ou de rinçage peuvent être stockés à l'intérieur du réservoir 11 respectivement lors des étapes de récupération d'énergie calorifique et de restitution de l'énergie calorifique captée.

Avantageusement, les particules de matériau à accumulation de chaleur encapsulées 12 sont mises en suspension à l'intérieur du réservoir 11 lors du stockage de l'au moins un des premier et deuxième bain de lavage et/ou de rinçage à l'intérieur du réservoir 11.

Dans un deuxième mode de réalisation de l'invention, l'au moins un des premier et deuxième bain de lavage et/ou de rinçage est mis en circulation à l'intérieur du réservoir 11 respectivement lors des étapes de récupération d'énergie calorifique et de restitution de l'énergie calorifique captée.

Bien entendu, les premier et deuxième bains de lavage et/ou de rinçage peuvent être mis en circulation à l'intérieur du réservoir 11 respectivement lors des étapes de récupération d'énergie calorifique et de restitution de l'énergie calorifique captée.

La mise en circulation de l'au moins un des premier et deuxième bain de lavage et/ou de rinçage à l'intérieur du réservoir 11 peut être réalisée depuis l'ouverture d'alimentation en eau 16 reliée à la pompe de circulation 6 jusqu'à l'ouverture de sortie 17 reliée à la cuve de lavage 2.

Dans un mode de réalisation, l'au moins un desdits premier et deuxième bain de lavage et/ou de rinçage peuvent être mis en circulation de manière répétée entre la cuve de lavage 2 et le réservoir 11 puis ledit réservoir 11 et ladite cuve de lavage 2 de sorte à améliorer les échanges de chaleur entre ledit au moins un desdits premier et deuxième bain de lavage et/ou de rinçage et les particules de matériau à accumulation de chaleur encapsulées 12 contenant un matériau à accumulation de chaleur.

Une telle mise en circulation de manière répétée d'au moins un desdits premier et deuxième bain de lavage et/ou de rinçage entre la cuve de lavage 2 et le réservoir 11 puis ledit réservoir 11 et ladite cuve de lavage 2 permet d'augmenter la durée des échanges de chaleur et/ou d'introduire une quantité d'eau d'au moins un bain de lavage et/ou de rinçage supérieure à celle de la contenance du réservoir 11 de sorte à récupérer ou à restituer une quantité d'énergie calorifique maximale.

Bien entendu, chaque introduction d'une partie d'au moins un desdits premier et deuxième bain de lavage et/ou de rinçage dans le réservoir 11 peut être suivie d'une étape de stockage de celui-ci dans ledit réservoir 11.

Dans un autre mode de réalisation, l'au moins un desdits premier et deuxième bain de lavage et/ou de rinçage peut être dirigé en totalité vers le réservoir 11 par les moyens de commande de l'appareil de lavage 1.

Si la quantité d'eau d'au moins un desdits premier et deuxième bain de lavage et/ou de rinçage à introduire dans le réservoir 11 est supérieure à la contenance dudit réservoir 11, alors la quantité d'eau d'au moins un desdits premier et deuxième bain de lavage et/ou de rinçage en surplus est évacuée en dehors dudit réservoir 11 par un dispositif de trop plein soit vers la cuve de lavage 2 soit vers un réseau d'eau usée, ou encore un dispositif de détection d'un niveau d'eau maximum du réservoir 11 est relié aux moyens de commande de l'appareil de lavage 1 de sorte à arrêter le remplissage dudit réservoir 11 dès la détection du niveau d'eau maximum puis la quantité d'eau d'au moins un desdits premier et deuxième bain de lavage et/ou de rinçage en surplus est évacuée vers un réseau d'eau usée.

Par ailleurs, l'appareil de lavage 1 peut comprendre un cycle de nettoyage du réservoir 11 par la circulation d'un bain pouvant contenir un produit de nettoyage, tel que par exemple un produit chloré. Ce cycle de nettoyage du réservoir 11 peut ainsi permettre de retirer des salissures et/ou des éléments en suspension entraînées par au moins un des bains de lavage et/ou de rinçage provenant de la cuve de lavage 2 et introduit dans ledit réservoir 11.

En outre, le réservoir 11 peut être conçu de sorte que les surfaces internes de celui-ci soient lisses et sans bavures.

On va décrire à présent un mode de réalisation de l'invention mis en oeuvre dans une machine à laver la vaisselle telle qu'illustrée aux figures 1 et 2.

L'énergie calorifique d'un bain de lavage est récupérée par ladite au moins une réserve d'un matériau à accumulation de chaleur 10 par la mise en contact du bain de lavage avec ladite au moins une réserve d'un matériau à accumulation de chaleur 10 logée à l'intérieur du réservoir 11.

Le bain de lavage peut être mis en circulation ou non à l'intérieur du réservoir 11 lors de l'étape de récupération d'énergie calorifique.

Puis, le bain de lavage est évacué du réservoir 11 vers le puisard 7 de la cuve de lavage 2 par l'ouverture de la vanne 14, où la pompe de circulation d'eau 6 est maintenue à l'arrêt.

Et ensuite, le bain de lavage est évacué de la machine à laver la vaisselle 1 vers un réseau d'eau usée au moyen de la pompe de vidange 8.

L'énergie calorifique récupérée du bain de lavage est stockée dans ladite au moins une réserve d'un matériau à accumulation de chaleur 10 jusqu'au remplissage en eau du réseau de la cuve de lavage 2 puis du réservoir 11 d'un bain de rinçage. L'eau du réseau alimentée dans la machine à laver la vaisselle 1 est mise en contact avec ladite au moins une réserve d'un matériau à accumulation de chaleur 10 logée dans le réservoir 11 et cette eau du bain de rinçage capte l'énergie calorifique stockée par ladite au moins une réserve d'un matériau à accumulation de chaleur 10.

Puis, le bain de rinçage chaud est évacué du réservoir 11 vers le puisard 7 de la cuve de lavage 2 par l'ouverture de la vanne 14, où la pompe de circulation d'eau 6 est maintenue à l'arrêt.

Et ensuite, le bain de rinçage chaud est utilisé dans la machine à laver la vaisselle 1 pour rincer les pièces de vaisselle au moyen de la pompe de circulation 6.

Suite à la phase de rinçage chaud des pièces de vaisselle contenues dans la cuve de lavage 2 de la machine à laver la vaisselle 1, l'énergie calorifique du bain de rinçage chaud est récupérée de manière similaire à l'énergie calorifique du bain de lavage par la mise en contact du bain de rinçage chaud avec ladite au moins une réserve d'un matériau à accumulation de chaleur 10 logée à l'intérieur du réservoir 11.

Puis, le bain de rinçage chaud est évacué du réservoir 11 vers le puisard 7 de la cuve de lavage 2 par l'ouverture de la vanne 14, où la pompe de circulation d'eau 6 est maintenue à l'arrêt.

Et ensuite, le bain de rinçage chaud est évacué de la machine à laver la vaisselle 1 vers un réseau d'eau usée au moyen de la pompe de vidange 8.

L'énergie calorifique récupérée du bain de rinçage chaud est stockée dans ladite au moins une réserve d'un matériau à accumulation de chaleur 10 jusqu'à :
- soit une phase de séchage ventilé des pièces de vaisselle, où un flux d'air entrant dans la cuve de lavage 2 est mis en contact avec ladite au moins une réserve d'un matériau à accumulation de chaleur 10 logée à l'intérieur du réservoir 11 de sorte à réchauffer ledit flux d'air entrant et améliorer l'efficacité de séchage des pièces de vaisselle ;
- soit une phase de lavage d'un cycle de fonctionnement suivant de la machine à laver la vaisselle 1, où de l'eau du réseau alimentée dans la machine à laver la vaisselle 1 est mise en contact avec ladite au moins une réserve d'un matériau à accumulation de chaleur 10 logée dans le réservoir 11 et cette eau du bain de lavage capte l'énergie calorifique stockée par ladite au moins une réserve d'un matériau à accumulation de chaleur 10.

Dans un autre mode de réalisation, suite à l'étape de récupération de l'énergie calorifique du bain de rinçage chaud par la mise en contact de ce dernier avec ladite au moins une réserve d'un matériau à accumulation de chaleur 10 logée à l'intérieur du réservoir 11, le bain de rinçage chaud est conservé en contact ladite au moins une réserve d'un matériau à accumulation de chaleur 10 dans ledit réservoir 11 jusqu'à un cycle de fonctionnement suivant mis en oeuvre par la machine à laver la vaisselle 1 et est réutilisé comme bain de lavage au cours d'une phase de lavage dudit cycle de fonctionnement suivant.

Lors de la mise en oeuvre de la phase de lavage du cycle de fonctionnement suivant par la machine à laver la vaisselle 1, le bain de rinçage chaud conservé en contact ladite au moins une réserve d'un matériau à accumulation de chaleur 10 dans le réservoir 11 est évacué dudit réservoir 11 vers le puisard 7 de la cuve de lavage 2 par l'ouverture de la vanne 14, où la pompe de circulation d'eau 6 est maintenue à l'arrêt.

Et ensuite, le bain de rinçage chaud réutilisé est soit évacué de la machine à laver la vaisselle 1 vers un réseau d'eau usée au moyen de la pompe de vidange 8 soit de nouveau retourné dans le réservoir 11 par la mise en fonctionnement de la pompe de circulation d'eau 6 et l'ouverture de la vanne 14.

En outre, au moins un bain de lavage et/ou de rinçage d'un cycle de fonctionnement en cours ou suivant peut être chauffé par un moyen de chauffage présent dans la cuve de lavage 2 ou chauffé à l'extérieur de la machine à laver la vaisselle 1 dans le cas où ladite machine 1 comprend une arrivée d'eau chaude d'un réseau.

On va décrire à présent un mode de réalisation de l'invention mis en oeuvre dans une machine à laver le linge.

Dans ce mode de réalisation de l'invention, les éléments analogues à ceux décrits en référence aux figures 1 et 2 portent les mêmes références et n'ont pas besoin d'être décrits à nouveau en détails ici.

L'énergie calorifique d'un bain de lavage est récupérée par ladite au moins une réserve d'un matériau à accumulation de chaleur 10 par la mise en contact du bain de lavage avec ladite au moins une réserve d'un matériau à accumulation de chaleur 10 logée à l'intérieur du réservoir 11.

Le bain de lavage est stocké temporairement à l'intérieur du réservoir 11 lors de l'étape de récupération d'énergie calorifique de sorte à créer un échange de chaleur entre ledit bain de lavage et ladite au moins une réserve d'un matériau à accumulation de chaleur 10.

Puis, le bain de lavage est évacué du réservoir 11 vers un réseau d'eau usée par l'ouverture de la vanne 14 puis au moyen de la pompe de vidange 8, où la pompe de circulation d'eau 6 est maintenue à l'arrêt.

L'énergie calorifique récupérée du bain de lavage est stockée dans ladite au moins une réserve d'un matériau à accumulation de chaleur 10 puis l'eau du bain de lavage est évacuée vers un réseau d'eau usée au plus tard avant l'étape de restitution d'énergie calorifique à un bain de rinçage. Le bain de rinçage est constitué par le remplissage en eau du réseau de la cuve de lavage 2. L'eau du réseau alimentée dans la machine à laver le linge est mise en contact avec ladite au moins une au moins une réserve d'un matériau à accumulation de chaleur 10 logée dans le réservoir 11 et cette eau du bain de rinçage capte l'énergie calorifique stockée par ladite au moins une réserve d'un matériau à accumulation de chaleur 10.

Puis, le bain de rinçage est réchauffé lors de son stockage dans le réservoir 11 puis est évacué du réservoir 11 vers la cuve de lavage 2 par l'ouverture de la vanne 14, où la pompe de circulation d'eau 6 est maintenue à l'arrêt.

Le bain de rinçage chauffé est stocké dans ladite au moins une réserve d'un matériau à accumulation de chaleur 10 jusqu'à une phase de lavage d'un cycle de fonctionnement suivant de la machine à laver le linge de sorte à être réutilisé par la machine à laver le linge.

Lors de la mise en oeuvre du cycle de fonctionnement suivant de la machine à laver le linge, l'eau contenue dans le réservoir 11 provenant d'un bain de rinçage d'un cycle de fonctionnement précédent est introduite dans la cuve de lavage 2 pour former au moins en partie un bain de lavage.

L'énergie calorifique stockée dans ladite au moins une réserve d'un matériau à accumulation de chaleur 10 et transférée au bain de rinçage d'un cycle de fonctionnement précédent contribue à diminuer l'apport thermique nécessaire pour chauffer l'eau d'un bain de lavage d'un cycle de fonctionnement suivant.

En outre, ce bain de lavage d'un cycle de fonctionnement suivant peut être chauffé par un moyen de chauffage présent dans la cuve de lavage 2 ou chauffé à l'extérieur de la machine à laver le linge dans le cas où ladite machine comprend une arrivée d'eau chaude d'un réseau.

Grâce à la présente invention, ladite au moins une réserve d'un matériau à accumulation de chaleur réalisée à partir de particules de matériau à accumulation de chaleur encapsulées et placée dans un réservoir couplé de manière fluidique avec la cuve de lavage permet de maximiser la surface d'échange de chaleur entre le matériau à accumulation de chaleur et ledit au moins un bain de lavage et/ou de rinçage de sorte à optimiser les échanges thermiques.

En outre, les phases d'échange de chaleur entre le matériau à accumulation de chaleur et lesdits au moins un premier et deuxième bain de lavage et/ou de rinçage sont raccourcies et d'efficacité améliorée tout en simplifiant la structure de l'appareil de lavage et l'industrialisation de celui-ci.

Bien entendu, de nombreuses modifications peuvent être apportées aux exemples de réalisation décrits précédemment sans sortir du cadre de l'invention.

Ainsi, l'appareil de lavage peut être une machine à laver le linge, une machine à laver et à sécher le linge, ou une machine à laver la vaisselle.

Et en particulier, l'ouverture d'alimentation en eau d'au moins un bain de lavage et/ou de rinçage peut être située en partie supérieure du réservoir comportant au moins une réserve d'un matériau à accumulation de chaleur.

Par ailleurs, lesdits au moins un premier et deuxième bain de lavage et/ou de rinçage utilisés pour récupérer et restituer l'énergie calorifique de l'eau contenue dans la cuve de lavage peuvent être constitués respectivement d'une partie ou de l'intégralité d'un ou plusieurs remplissage en eau du réseau de la cuve de lavage.

## Revendications

1. Appareil de lavage (1) comprenant une cuve de lavage (2), un échangeur de chaleur (9), ladite cuve de lavage (2) contenant au moins un bain de lavage et/ou de rinçage utilisé lors d'un cycle de fonctionnement dudit appareil de lavage (1), ledit échangeur de chaleur (9) comprenant au moins une réserve d'un matériau à accumulation de chaleur (10) captant l'énergie calorifique d'au moins un premier bain de lavage et/ou de rinçage et restituant ladite énergie calorifique captée à au moins un deuxième bain de lavage et/ou de rinçage, ledit appareil de lavage (1) comprenant un réservoir (11) en communication fluidique avec ladite cuve de lavage (2),où lesdits au moins un premier et deuxième bain de liquide de lavage et/ou de rinçage sont mis en circulation successivement entre ladite cuve de lavage (2) et ledit réservoir (11) :
**caractérisé en ce que** :
- ledit réservoir (11) comporte ladite au moins une réserve d'un matériau à accumulation de chaleur (10) réalisée à partir de particules de matériau à accumulation de chaleur encapsulées (12),
- où ledit réservoir (11) comprend au moins un élément de maintien (18) desdites particules de matériau à accumulation de chaleur encapsulées (12) à l'intérieur de celui-ci.

2. Appareil de lavage (1) selon la revendication 1, **caractérisé en ce que** ledit au moins un élément de maintien (18) desdites particules de matériau à accumulation de chaleur encapsulées (12) à l'intérieur dudit réservoir (11) est au moins une grille.

3. Appareil de lavage (1) selon la revendication 1, **caractérisé en ce que** ledit au moins un élément de maintien (18) desdites particules de matériau à accumulation de chaleur encapsulées (12) à l'intérieur dudit réservoir (11) est au moins un dispositif de retenue en forme d'entonnoir.

4. Appareil de lavage (1) selon l'une quelconque des revendications 1 à 3. **caractérisé en ce que** lesdites particules de matériau à accumulation de chaleur encapsulées (12) comporte un matériau à changement de phase.

5. Procédé de commande en fonctionnement d'un appareil de lavage (1), ledit appareil de lavage (1) comprenant une cuve de lavage (2), un échangeur de chaleur (9). ladite cuve de lavage (2) contenant au moins un bain de lavage et/ou de rinçage utilisé lors d'un cycle de fonctionnement dudit appareil de lavage (1), ledit échangeur de chaleur (9) comprenant au moins une réserve d'un matériau à accumulation de chaleur (10) captant l'énergie calorifique d'au moins un premier bain de lavage et/ou de rinçage et restituant ladite énergie calorifique captée à au moins un deuxième bain de lavage et/ou de rinçage, **caractérisé en ce que** ledit procédé comprend au moins les étapes suivantes :
- introduction successive desdits au moins un premier et deuxième bain de lavage et/ou de rinçage depuis ladite cuve de lavage (2) à l'intérieur d'un réservoir (11) comportant ladite au moins une réserve d'un matériau à accumulation de chaleur (10) réalisée à partir de particules de matériau à accumulation de chaleur encapsulées (12).
- où ledit réservoir (11) comprend au moins un élément de maintien (18) desdites particules de matériau à accumulation de chaleur encapsulées (12) à l'intérieur de celui-ci.

6. Procédé de commande en fonctionnement d'un appareil de lavage (1) selon la revendication 5, **caractérisé en ce que** ladite étape d'introduction dudit au moins un premier bain de lavage et/ou de rinçage depuis ladite cuve de lavage (2) à l'intérieur dudit réservoir (11) est suivie d'une étape de récupération de l'énergie calorifique dudit au moins un premier bain de lavage et/ou de rinçage par lesdites particules de matériau à accumulation de chaleur encapsulées (12).

7. Procédé de commande en fonctionnement d'un appareil de lavage (1) selon la revendication 6, **caractérisé en ce que** ladite étape de récupération de l'énergie calorifique dudit au moins un premier bain de lavage et/ou de rinçage est suivie d'une étape d'évacuation dudit au moins un premier bain de lavage et/ou de rinçage depuis ledit réservoir (11) vers ladite cuve de lavage (2) et/ou vers un réseau d'eau usée.

8. Procédé de commande en fonctionnement d'un appareil de lavage (1) selon la revendication 7, **caractérisé en ce qu'**une étape de conservation dudit au moins un premier bain de lavage et/ou de rinçage en contact avec ladite au moins une réserve d'un matériau à accumulation de chaleur (10) dans ledit réservoir (11) est mise en oeuvre entre ladite étape de récupération de l'énergie calorifique dudit au moins un premier bain de lavage et/ou de rinçage et ladite étape d'évacuation dudit au moins un premier bain de lavage et/ou de rinçage depuis ledit réservoir (11) vers ladite cuve de lavage (2) de sorte à réutiliser ledit au moins un premier bain de lavage et/ou de rinçage au cours d'un cycle de fonctionnement suivant mis en oeuvre par ledit appareil de lavage (1).

9. Procédé de commande en fonctionnement d'un appareil (1) de lavage selon l'une quelconque des revendications 5 à 8, **caractérisé en ce que** ladite étape d'introduction dudit au moins un deuxième bain de lavage et/ou de rinçage depuis ladite cuve de lavage (2) à l'intérieur dudit réservoir (11) est suivie d'une étape de restitution de ladite énergie calorifique captée par lesdites particules de matériau à accumulation de chaleur encapsulées (12).

10. Procédé de commande en fonctionnement d'un appareil de lavage (1) selon la revendication 9, **caractérisé en ce que** ladite étape de restitution de ladite énergie calorifique captée est suivie d'une étape d'évacuation dudit au moins un deuxième bain de lavage et/ou de rinçage depuis ledit réservoir (11) vers ladite cuve de lavage (2).

11. Procédé de commande en fonctionnement d'un appareil de lavage (1) selon la revendication 10, **caractérisé en ce qu'**une étape de conservation dudit au moins un deuxième bain de lavage et/ou de rinçage en contact avec ladite au moins une réserve d'un matériau à accumulation de chaleur (10) dans ledit réservoir (11) est mise en oeuvre entre ladite étape de restitution de ladite énergie calorifique captée et ladite étape d'évacuation dudit au moins un deuxième bain de lavage et/ou de rinçage depuis ledit réservoir (11) vers ladite cuve de lavage (2) de sorte à réutiliser ledit au moins un deuxième bain de lavage et/ou de rinçage au cours d'un cycle de fonctionnement suivant mis en oeuvre par ledit appareil de lavage (1).

12. Procédé de commande en fonctionnement d'un appareil de lavage (1) selon la revendication 6 ou 9, **caractérisé en ce que** l'au moins un des premier et deuxième bain de lavage et/ou de rinçage est stocké à l'intérieur dudit réservoir (11) respectivement lors des étapes de récupération d'énergie calorifique et de restitution de ladite énergie calorifique captée.

13. Procédé de commande en fonctionnement d'un appareil de lavage (1) selon la revendication 12, **caractérisé en ce que** lesdites particules de matériau à accumulation de chaleur encapsulées (12) sont mises en suspension à l'intérieur dudit réservoir (11) lors du stockage de l'au moins un des premier et deuxième bain de lavage et/ou de rinçage à l'intérieur dudit réservoir (11).

14. Procédé de commande en fonctionnement d'un appareil de lavage (1) selon la revendication 6 ou 9, **caractérisé en ce que** l'au moins un des premier et deuxième bain de lavage et/ou de rinçage est mis en circulation à l'intérieur dudit réservoir (11) respectivement lors des étapes de récupération d'énergie calorifique et de restitution de ladite énergie calorifique captée.

## Claims

1. A washing machine (1) comprising a wash tub (2), a heat exchanger (9), said wash tub (2) containing at least one washing and/or rinsing bath used during an operating cycle of said washing machine (1), said heat exchanger (9) comprising at least one reserve of a heat-accumulating material (10) capturing the heat energy of at least one first washing and/or rinsing bath and returning said captured heat energy to at least one second washing and/or rinsing bath, said washing machine (1) comprising a tank (11) in fluid communication with said wash tub (2), wherein said at least one first and second liquid washing and/or rinsing bath are caused to circulate successively between said wash tub (2) and said tank (11):
**characterized in that**:
- said tank (11) comprises said at least one reserve of a heat-accumulating material (10) constructed of encapsulated particles of heat-accumulating material (12),
- wherein said tank (11) comprises at least one element (18) that holds said encapsulated heat-accumulating particles (12) inside it.

2. A washing machine (1) according to claim 1, **characterized in that** said at least one element (18) that holds said encapsulated heat-accumulating particles (12) inside said tank (11) is at least one grille.

3. A washing machine (1) according to claim 1, **characterized in that** said at least one element (18) that holds said encapsulated heat-accumulating particles (12) inside said tank (11) is at least one funnel-shaped retention device.

4. A washing machine (1) according to any one of the claims 1 to 3, **characterized in that** said encapsulated heat-accumulating particles (12) comprise a phase-changing material.

5. A method for controlling the operation of a washing machine (1), said washing machine (1) comprising a wash tub (2), a heat exchanger (9), said wash tub (2) containing at least one washing and/or rinsing bath used during an operating cycle of said washing machine (1), said heat exchanger (9) comprising at least one reserve of a heat-accumulating material (10) capturing the heat energy of at least one first washing and/or rinsing bath and returning said captured heat energy to at least one second washing and/or rinsing bath, **characterized in that** said method comprises at least the following steps:
- successively introducing said at least one first and second washing and/or rinsing bath from said wash tub (2) into a tank (11) comprising said at least one reserve of a heat-accumulating material (10) constructed of encapsulated particles of heat-accumulating material (12),
- wherein said tank (11) comprises at least one element (18) that holds said encapsulated heat-accumulating particles (12) inside it.

6. A method for controlling the operation of a washing machine (1) according to claim 5, **characterized in that** said step of introducing said at least one first washing and/or rinsing bath from said wash tub (2) into said tank (11) is followed by a step of said encapsulated particles of heat-accumulating material (12) retrieving heat energy from said at least one first washing and/or rinsing bath.

7. A method for controlling the operation of a washing machine (1) according to claim 6, **characterized in that** said step of retrieving heat from said at least one first washing and/or rinsing bath is followed by a step of discharging said at least one first washing and/or rinsing bath from said tank (11) to said wash tub (2) and/or to the waste water system.

8. A method for controlling the operation of a washing machine (1) according to claim 7, **characterized in that** a step of keeping said at least one first washing and/or rinsing bath in contact with said at least one reserve of a heat-accumulating material (10) within said tank (11) is implemented between said step of retrieving heat energy from said at least one first washing and/or rinsing bath and said step of discharging said at least one first washing and/or rinsing bath from said tank (11) to said wash tub (2), so as to reuse said at least one first washing and/or rinsing bath during a following operating cycle implemented by said washing machine (1).

9. A method for controlling the operation of a washing machine (1) according to any one of the claims 5 to 8, **characterized in that** said step of introducing said at least one second washing and/or rinsing bath from said wash tub (2) into said tank (11) is followed by a step of returning said heat energy captured by said encapsulated heat-accumulating particles (12).

10. A method for controlling the operation of a washing machine (1) according to claim 9, **characterized in that** said step of returning said captured heat energy is followed by a step of discharging said at least one second washing and/or rinsing bath from said tank (11) to said wash tub (2).

11. A method for controlling the operation of a washing machine (1) according to claim 10, **characterized in that** a step of keeping said at least one second washing and/or rinsing bath in contact with said at least one reserve of a heat-accumulating material (10) within said tank (11) is implemented between said step of returning said captured heat energy and said step of discharging said at least one second washing and/or rinsing bath from said tank (11) to said wash tub (2), so as to reuse said at least one second washing and/or rinsing bath during a following operating cycle implemented by said washing machine (1).

12. A method for controlling the operation of a washing appliance (1) according to claim 6 or 9, **characterized in that** at least one of the first and second wash and/or rinse bath is stored within said tank (11) respectively during steps of retrieving heat energy and returning said captured heat energy.

13. A method for controlling the operation of a washing machine (1) according to claim 12, **characterized in that** said encapsulated heat-accumulating particles (12) are suspended within said tank (11) during the storage of at least one of the first and second washing and/or rinsing bath inside said tank (11).

14. A method for controlling the operation of a washing machine (1) according to claim 6 or 9, **characterized in that** at least one of the first and second washing and/or rinsing bath is circulated within said tank (11) respectively during steps of retrieving heat energy and returning said captured heat energy.

## Patentansprüche

1. Waschgerät (1) mit einem Laugenbehälter (2), einem Wärmetauscher (9), wobei der besagte Laugenbehälter (2) mindestens eine während eines Betriebszyklus des besagten Waschgeräts (1) verwendete Wasch- und/oder Spülflotte enthält, wobei der besagte Wärmetauscher (9) mindestens einen Vorrat eines Wärmespeichermaterials (10) enthält, welches die Wärmeenergie mindestens einer ersten Wasch- und/oder Spülflotte aufnimmt und die besagte aufgenommene Wärmeenergie an mindestens eine zweite Wasch- und/oder Spülflotte abgibt, wobei das besagte Waschgerät (1) einen Speicher (11) umfasst, der fluidisch mit dem besagten Laugenbehälter (2) verbunden ist, wobei die besagten mindestens einen ersten und zweiten Wasch- und/oder Spülflüssigkeitsbäder nacheinander zwischen dem besagten Laugenbehälter (2) und dem besagten Speicher (11) umgewälzt werden;
**dadurch gekennzeichnet, dass**:
- der besagte Speicher (11) den besagten mindestens einen Vorrat eines aus eingekapselten Wärmespeichermaterialpartikeln (12) bestehenden Wärmespeichermaterials (10) enthält,
- wobei der besagte Speicher (11) mindestens ein Element zum Zurückhalten (18) der besagten eingekapselten Wärmespeichermaterialpartikel (12) in seinem Inneren umfasst.

2. Waschgerät (1) nach Anspruch 1, **dadurch gekennzeichnet, dass** das besagte mindestens eine Element zum Zurückhalten (18) der besagten eingekapselten Wärmespeichermaterialpartikel (12) im Inneren des besagten Speichers (11) mindestens ein Gitter ist.

3. Waschgerät (1) nach Anspruch 1, **dadurch gekennzeichnet, dass** das besagte mindestens eine Element zum Zurückhalten (18) der besagten eingekapselten Wärmespeichermaterialpartikel (12) im Inneren des Speichers (11) mindestens eine Vorrichtung zum Zurückhalten in der Form eines Trichters ist.

4. Waschgerät (1) nach einem beliebigen der Ansprüche 1 bis 3, **dadurch gekennzeichnet, dass** die besagten eingekapselten Wärmespeichermaterialpartikel (12) ein Phasenwechselmaterial enthalten.

5. Verfahren zur Betriebssteuerung eines Waschgeräts (1), wobei das besagte Waschgerät (1) einen Laugenbehälter (2), einen Wärmetauscher (9) umfasst, wobei der besagte Laugenbehälter (2) mindestens eine während eines Betriebszyklus des besagten Waschgeräts (1) verwendete Wasch- und/oder Spülflotte enthält, wobei der besagte Wärmetauscher (9) mindestens einen Vorrat eines Wärmespeichermaterials (10) enthält, welches die Wärmeenergie mindestens einer ersten Wasch- und/oder Spülflotte aufnimmt und die besagte aufgenommene Wärmeenergie an mindestens eine zweite Wasch- und/oder Spülflotte abgibt, **dadurch gekennzeichnet, dass** das besagte Verfahren mindestens die folgenden Schritte umfasst:
- Aufeinanderfolgendes Einführen der besagten mindestens einen ersten und zweiten Wasch- und/oder Spülflotte aus dem besagten Laugenbehälter (2) ins Innere eines Speichers (11), welcher den besagten mindestens einen Vorrat eines aus eingekapselten Wärmespeichermaterialpartikeln (12) bestehenden Wärmespeichermaterials (10) enthält.
- wobei der besagte Speicher (11) mindestens ein Element zum Zurückhalten (18) der besagten eingekapselten Wärmespeichermaterialpartikel (12) in seinem Inneren umfasst.

6. Verfahren zur Betriebssteuerung eines Waschgeräts (1) nach Anspruch 5, **dadurch gekennzeichnet, dass** auf den besagten Schritt des Einführens der besagten mindestens einen ersten Wasch- und/oder Spülflotte aus dem besagten Laugenbehälter (2) ins Innere des besagten Speichers (11) ein Schritt des Rückgewinnens der Wärmeenergie der besagten mindestens einen ersten Wasch- und/oder Spülflotte durch die besagten eingekapselten Wärmespeichermaterialpartikel (12) folgt.

7. Verfahren zur Betriebssteuerung eines Waschgeräts (1) nach Anspruch 6; **dadurch gekennzeichnet, dass** auf den besagten Schritt des Rückgewinnens der Wärmeenergie der besagten mindestens einen ersten Wasch- und/oder Spülflotte ein Schritt des Ablassens der besagten mindestens einen ersten Wasch- und/oder Spülflotte aus dem besagten Speicher (11) in den besagten Laugenbehälter (2) und/oder in ein Abwassernetz folgt.

8. Verfahren zur Betriebssteuerung eines Waschgeräts (1) nach Anspruch 7, **dadurch gekennzeichnet, dass** ein Schritt des Zurückhaltens der besagten mindestens einen ersten Wasch- und/oder Spülflotte, welche mit dem besagten mindestens einen Vorrat eines Wärmespeichermaterials (10) in dem besagten Speicher (11) in Kontakt steht, zwischen dem besagten Schritt des Rückgewinnens der Wärmeenergie der besagten mindestens einen ersten Wasch- und/oder Spülflotte und dem besagten Schritt des Ablassens der besagten mindestens einen ersten Wasch- und/oder Spülflotte aus dem besagten Speicher (11) in den besagten Laugenbehälter (2) durchgeführt wird, um die besagte mindestens eine erste Wasch- und/oder Spülflotte während eines von dem besagten Waschgerät (1) durchgeführten anschließenden Betriebszyklus wiederzuverwenden.

9. Verfahren zur Betriebssteuerung eines Waschgeräts (1) nach einem beliebigen der Ansprüche 5 bis 8, **dadurch gekennzeichnet, dass** auf den besagten Schritt des Einführens der besagten mindestens einen zweiten Wasch- und/oder Spülflotte von dem besagten Laugenbehälter (2) in den besagten Speicher (11) ein Schritt des Abgebens der besagten von den besagten eingekapselten Wärmespeichermaterialpartikel (12) aufgenommenen Wärmeenergie folgt.

10. Verfahren zur Betriebssteuerung eines Waschgeräts (1) nach Anspruch 9, **dadurch gekennzeichnet, dass** auf den besagten Schritt des Abgebens der besagten Wärmeenergie ein Schritt des Ablassens der besagten mindestens einen zweiten Wasch- und/oder Spülflotte aus dem besagten Speicher (11) in den besagten Laugenbehälter (2) folgt.

11. Verfahren zur Betriebssteuerung eines Waschgeräts (1) nach Anspruch 10, **dadurch gekennzeichnet, dass** ein Schritt des Zurückhaltens der besagten mindestens zweiten Wasch- und/oder Spülflotte, die mit dem besagten mindestens einen Vorrat eines Wärmespeichermaterials (10) in dem besagten Speicher (11) in Kontakt steht, zwischen dem besagten Schritt des Abgebens der besagten aufgenommenen Wärmeenergie und dem besagten Schritt des Ablassens der besagten mindestens einen zweiten Wasch- und/oder Spülflotte aus dem besagten Speicher (11) in den besagten Laugenbehälter (2) durchgeführt wird, um die besagte mindestens eine zweite Wasch- und/oder Spülflotte während eines von dem besagten Waschgerät (1) durchgeführten anschließenden Betriebszyklus wiederzuverwenden.

12. Verfahren zur Betriebssteuerung eines Waschgeräts (1) nach Anspruch 6 oder 9, **dadurch gekennzeichnet, dass** die mindestens eine der besagten ersten und zweiten Wasch- und/oder Spülflotte jeweils während der Durchführung der Schritte des Rückgewinnens der Wärmeenergie und des Abgebens der besagten aufgenommenen Wärmeenergie in dem besagten Speicher (11) gespeichert wird.

13. Verfahren zur Betriebssteuerung eines Waschgeräts (1) nach Anspruch 12, **dadurch gekennzeichnet, dass** die besagten eingekapselten Wärmespeichermaterialpartikel (12) während des Speicherns der mindestens einen der ersten und zweiten Wasch- und/oder Spülflotte in dem besagten Speicher (11) im Inneren des besagten Speichers (11) suspendiert werden.

14. Verfahren zur Betriebssteuerung eines Waschgeräts (1) nach Anspruch 6 oder 9, **dadurch gekennzeichnet, dass** die mindestens eine der ersten und zweiten Wasch- und/oder Spülflotte jeweils während der Durchführung der Schritte des Rückgewinnens der Wärmeenergie und des Abgebens der besagten Wärmeenergie innerhalb des besagten Speichers (11) umgewälzt wird.
